# EUROPEAN PATENT APPLICATION

(11) **EP 2 233 395 A1**
(43) Date of publication of application: **29.09.2010**
(21) Application number: 09156027.6
(22) Date of filing: 24.03.2009
(51) Int. Cl.: B64C 23/06

(54) **Winglet with autonomously actuated tab**

(71) Applicant: EADS Deutschland GmbH, 85521 Ottobrunn (DE); Airbus Operations Limited, Bristol BS99 7AR (GB)
(72) Inventor: Wildschek, Andreas, 82024 Taufkirchen (DE); Maier, Rudolf, Dr., 83714 Miesbach (DE)
(74) Representative: Lewinsky, Klaus

(57) **Abstract**

A winglet (12) for an aircraft wing comprises at least one movable tab (16) at the winglet trailing edge (14), an actuating means (18) for actuating said tab (16) and a control unit (20) for controlling said actuating means (18), further comprising a detecting means (22, 26) coupled to said control unit (20) for detecting either a non-symmetric air flow around said winglet (12) or the winglet lateral bending induced by said air flow, said control unit (20) actuating said at least one tab (16) so as to reduce winglet bending. The main advantage of the invention is that an unsymmetrical air flow around the winglet (12) is detected and counteracted by adjusting the tab (16) which leads to a compensation of the external forces acting upon the winglet (12).

## Description

The invention relates to a winglet for an aircraft wing comprising at least one movable tab at the winglet trailing edge, an actuating means for actuating said tab and a control unit for controlling said actuating means.

Such a winglet is known from WO 2008/031620 which discloses a winglet with at least two tabs which are oscillating in paraphase.

It is known that vertical airfoils, so-called winglet, on the wing tips of aircraft reduce the induced drag caused by the difference in air flow pressure between the upper and lower surfaces of the wing. This increases the efficiency of operation and thus reduces fuel consumption. For maximum advantage it would be advisable to scale such winglets as large as possible which, however, would be subject to large lateral forces in case of lateral maneuvering of the aircraft or non-symmetrical (in relation to the axis of flight) gusts and turbulences. Thus significant wing reinforcements are generally required in order to integrate a large winglet device even if aeroelestic tailoring and winglet flexibility are accounted for in the loads calculations. Due to these loads the winglets and wings (especially winglet/wing interface) need to have a sufficient rigid structure which lead to a considerable increase in structural weight reducing the attainable performance increase achieved by the winglets.

Providing winglets with controlled tabs for generating a force counteracting the above lateral forces would be possible. These winglet tabs would be controlled by the flight control system of the aircraft but such a coupling between the flight control system and the winglet tab actuation eventually requires redesign and thus re-certification of the whole flight control system. As large winglet devices are considered as a retro-fit solution to improving the aircraft performance on existing airliners, actuable tabs would lead to significant costs of certification.

A further possibility would be to provide winglets with passive actuation by applying a rudder-horn concept.

It is therefore object of the invention to provide a winglet for an aircraft wing which avoids the above drawbacks and which allows a comparatively light structure and operation independently of the airplane flight control system.

These objects are met by the features set out in claim 1. Preferred embodiments are set out in the dependent claims.

The main advantages of the invention are that an unsymmetrical air flow around the winglets is detected and counteracted by adjusting the tab which leads to a compensation of the external forces acting upon the winglet by this air flow which reduces the strain in the winglet and wing structure and thus allows a lighter design thereof. Further, a possibly totally autonomous operation of the winglet tab actuation is possible without any connection with the airplane flight control system. Thus, the retro-fitting of winglets according to the invention is possible without any certification of the flight control system due to interactions with newly introduced external components. The control unit is optimized for the minimization of the loads in the winglet root attachment to the wing.

The tab can be arranged along the entire vertical length of the winglet or preferably only part of it, preferably near the winglet tip. There could be a plurality of tabs actuated together or independently of another.

According to a first preferred embodiment of the invention the detecting means comprises at least two laterally spaced pressure sensors arranged near a winglet leading edge. In case of a non-symmetrical air flow with respect to the winglet these pressure sensors detect differing pressure values which allow a determination of the amount of non-symmetrical air flow and its velocity and thus a calculation of the lateral bending force acting upon the winglet. Depending on the calculated force the tab is actuated so that an appropriate counter force is generated which relieves the bending strain acting upon the winglet and its root region.

According to a second preferred embodiment of the invention the detecting means comprises bend and/or torsion detecting means coupled to said control unit for detecting a winglet lateral bending and/or torsion. These bend/torsion detecting means could be provided additionally or instead of the pressure sensors to more directly measure rather than calculate the strain upon the winglet.

Preferably this bend/torsion detecting means comprises at least a strain gauge which is attached to either of the inner or outer (with respect to the aircraft) side wall interiors of the winglet, preferably at a position of maximum bending or torsion strain. Also, two strain gauges arranged on both the inner and outer side wall interiors could be provided to calculate the amount of bending based on the two measurement values.

The bend/torsion detecting means is used for the adaptation of a feed-forward controller in order to optimize its performance for the alleviation of the measured strains.

According to a further preferred embodiment of the invention the bend detecting means comprises an optical bending detection means. This embodiment allows the most direct measurement of the winglet bending. A preferred embodiment would be a camera arranged either in the tip or root region of the winglet looking at an optical identification pattern (e.g. lines) at the vertically opposed winglet end, i.e. root or tip, so that in case of a lateral winglet bending the camera identifies a change in the camera image. Alternatively, a radiation (light, e.g. LED) emitting system could be provided at the tip or root directing radiation towards a photo detector device (e.g. a photo diode) capable of sensing changes in illumination.

According to a further preferred embodiment of the invention an acceleration sensor is arranged near a tip of said winglet and coupled to said control unit for measuring the acceleration of said winglet tip in relation to the aircraft acceleration. This requires either a second acceleration sensor arranged at the winglet root as reference acceleration so that the control unit can calculate the acceleration and thus lateral bending of the winglet tip based on these acceleration values. Alternatively to the second acceleration sensor placed in the winglet root the control unit could be coupled to the airplane flight control system for receiving the aircraft acceleration value as reference acceleration. Preferably this embodiment would be provided in addition to any of the other detection means as a second source of data for establishing the winglet bending. As an acceleration is only measurable in case of relative movement of the winglet tip in relation to its root this can only measure either changing bending values or oscillations.

According to a further preferred embodiment of the invention said control unit is coupled to a flight control system of the aircraft for receiving aircraft status data. This includes but is not limited to any of aircraft turning rate, acceleration, sideslip angle, rudder position, aileron position. The data would be used either for calculation of the winglet bending or for additional superposed actuation of the winglet tab to compensate for other aerodynamical effects affecting the aircraft flight behavior. Especially a superposed actuation could be provided in case of two tabs to achieve the features and advantages of the arrangement shown in document WO 2008/031620.

The invention is further described with reference to the attached drawings, wherein
Fig. 1: depicts a top view of a aircraft wing tip showing a winglet cross section;
Fig. 2: depicts a side view of the winglet of Fig. 1.

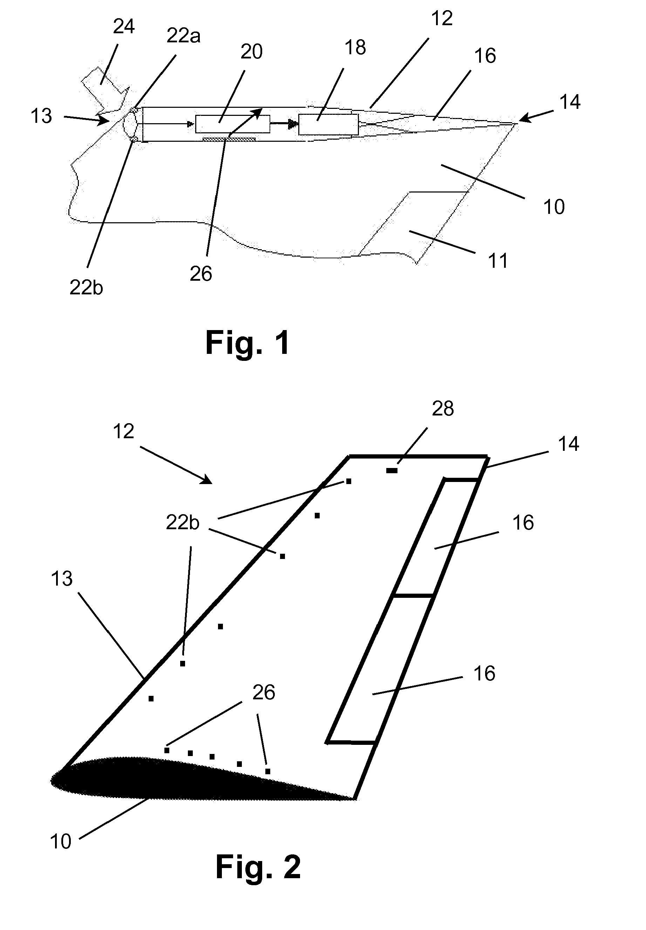

As shown in both figures, the outer part of an aircraft wing **10** comprising an aileron **11,** a winglet **12** is arranged at the tip of the wing **10** having a leading edge **13** and a trailing edge **14.** Along at least part of the trailing edge **14** there is provided at least one tab **16** which is actuable in both lateral directions by an actuating device **18.** It is of course possible to provide more than one tab, as shown. The actuating device **18** is controlled by a control unit (an adaptive fee-forward controller) **20** which receives signals from pressure detectors **22a, 22b** arranged laterally spaced near the winglet leading edge **13.** As can be seen in Fig. 2 preferably rows of pressure detectors **22b** are arranged spaced in vertical direction (not shown on the other side of winglet **12** a second row of pressure detectors **22a** is arranged). In case of a symmetrical air flow both pressure detector rows **22a, 22b** detect approximately the same pressure in which case the tab **16** is positioned in the middle position having no deflection. In case of a non-symmetrical air flow, depicted by arrow **24,** the pressure detectors **22a** would measure a higher pressure than pressure detectors **22b.** The control unit **20** would calculate from the pressure values the pressure acting laterally on the winglet **12** and thus the bending force and/or amount of bending. In response to the calculated bending force the control unit **20** would control the actuator **18** to deflect the tab **16** to such an extent that the resulting force counteracts and in the best case totally nullifies the bending force induced by the non-symmetrical air flow. This basic principle is an open-loop control. To improve control accuracy at least one, preferably a number of strain gauges **26** attached preferably to the inner wall of the winglet mantle is provided which measures the bending strain of the winglet **12** bent by the transversal wind forces. The strain gauges **26** are connected to the control unit **20** for the adaptive control of the control unit **20.**

Fig. 2 also shows an acceleration sensor **28** arranged near a tip of said winglet **12** for measuring the acceleration of the winglet tip in relation to the aircraft acceleration. This acceleration sensor **28** is connected to the control unit **20** for adapting the performance of the control of tabs **16** for minimizing the binding of the winglet **12.**

## Claims

1. Winglet (12) for an aircraft wing (10) comprising at least one movable tab (16) at the winglet trailing edge (14), an actuating means (18) for actuating said tab (16) and a control unit (20) for controlling said actuating means (18), **characterized by** a detecting means (22, 26) coupled to said control unit (20) for detecting either a non-symmetric air flow around said winglet (12) or the winglet lateral bending induced by said air flow, said control unit (20) actuating said at least one tab (16) so as to reduce winglet bending.

2. Winglet according to claim 1, wherein said detecting means comprises at least two laterally spaced pressure sensors (22a, 22b) arranged near a winglet leading edge (13).

3. Winglet according to claim 2, wherein said detecting means comprises two rows of vertically spaced pressure sensors (22a, 22b).

4. Winglet according to claim 1, wherein said detecting means comprises deformation detecting means (26) for detecting a winglet deformation.

5. Winglet according to claim 4, wherein said deformation detecting means comprises at least one winglet bend sensor (26) for detecting the winglet lateral bending.

6. Winglet according to claim 5, wherein said deformation detecting means comprise a row of spaced winglet bend sensors (26).

7. Winglet according to claim 3, wherein said deformation detecting means (26) comprises a winglet torsion sensor for detecting the winglet torsion.

8. Winglet according to claim 4, wherein said bend detecting means comprises at least a strain gauge (26).

9. Winglet according to claim 4, wherein said bend detecting means comprises an optical bending detection means.

10. Winglet according to claim 1, further comprising an acceleration sensor (28) arranged near a tip of said winglet (12) for measuring the acceleration of said winglet (12) tip in relation to the aircraft acceleration.

11. Winglet according to any of the preceding claims, wherein said control unit (20) is coupled to a flight control system of the aircraft for receiving aircraft status data.

12. Winglet according to claim 11, wherein said control data includes any of turning rate, acceleration, sideslip angle, rudder position, aileron position.

13. Winglet according to claim 3, wherein the signal of said deformation detecting means (26) is used to adapt the feed-forward controller towards maximum performance.
